# EUROPÄISCHE PATENTANMELDUNG

(11) **EP 2 549 638 A1**
(43) Veröffentlichungstag der Anmeldung: **23.01.2013**
(21) Anmeldenummer: 11174546.9
(22) Anmeldetag: 19.07.2011
(51) Int. Cl.: H02M 5/16

(54) **Stromversorgungsanordnung für einen Reaktor zur Polysiliciumherstellung mit einem Frequenzumrichter**

(71) Anmelder: AEG Power Solutions B.V., 1161 AH Zwanenburg (NL)
(72) Erfinder: Wallmeier, Peter, 59556 Lippstadt (DE)
(74) Vertreter: Graefe, Jörg

(57) **Zusammenfassung**

Die Erfindung betrifft eine Stromversorgungsanordnung (MF) für einen Reaktor (R) zur Polysiliciumherstellung mit einem Frequenzumrichter, mit mindestens einem Eingang zur Aufnahme eines Eingangsstroms aus einem Versorgungsnetz, mit welchem der Eingang verbindbar ist, und Ausgängen zum Anschließen von einer oder mehrerer Lasten (3), über welchen die Last oder die Lasten (3) mit einem Ausgangsstrom versorgbar sind, wobei die Stromversorgungsanordnung eine trafolose Schaltung zum Umwandeln des Eingangsstroms in einen n-phasigen Mehrphasenwechselstrom aufweist, wobei die Phasenverschiebung zwischen verketteten Spannungen eines sekundärseitig der Schaltung zum Umwandeln gebildeten n-Phasen-Wechselstromsystems 360°/n beträgt und wobei n eine natürliche Zahl größer oder gleich zwei ist, dass die Stromversorgungsanordnung (MF) n Ausgänge aufweist,
dass die Ausgänge eine Kette bilden und
dass an jedem Ausgang eine der verketteten Spannungen des n-Phasen-Wechselstromsystems anliegt.

## Beschreibung

Die vorliegende Erfindung betrifft eine Stromversorgungsanordnung für einen Reaktor zur Polysiliciumherstellung mit einem Frequenzumrichter, mit mindestens einem Eingang zur Aufnahme eines Eingangsstroms aus einem Versorgungsnetz, mit welchem der Eingang verbindbar ist, und Ausgängen zum Anschließen von einer oder mehrerer Lasten, über welche die Last oder die Lasten mit einem Ausgangsstrom versorgbar sind.

Aus dem Dokument EP 2 100 851 A2 sind Stromversorgungsanordnungen bekannt, die Frequenzumrichter umfassen und aus einem einphasigen Versorgungsnetz mit elektrischer Energie versorgt werden können. An die Stromversorgungsanordnungen mit den Frequenzumrichtern können Lasten angeschlossen werden, zum Beispiel Siliciumstäbe eines Siliciumreaktors zur Herstellung von Polysilicium durch Dampfabscheidung nach dem Siemensverfahren.

Anhand der Figur 3 des Dokumentes EP 2 100 851 A2 ist dargestellt, dass zwei in Reihe geschaltete Lasten von je einer Stromversorgungsanordnung mit den Frequenzumrichtern mit elektrischer Energie versorgt werden, wobei die Stromversorgungsanordnungen mit den Frequenzumrichtern jeweils einphasig ausgeführt sind. Die Phase zwischen den Stromversorgungsanordnungen bereitgestellten Strömen beträgt 180°. Die von den beiden Stromversorgungsanordnungen mit den Frequenzumrichtern bereitgestellten Spannungen heben sich daher in der Summe auf.

In den nach dem Anmeldetag der vorliegenden Anmeldung zu veröffentlichenden europäischen Patenanmeldungen mit den Anmeldenummern 10 150 728 und 11 164 316 sind Stromversorgungsanordnungen mit Frequenzumrichtern beschrieben, an deren Ausgang ein Transformator mit einer Primärwicklung und zwei Sekundärwicklungen angeschlossen ist. Die beiden Sekundärwicklungen haben die gleiche Wicklungszahl. Sie sind aber gegensinnig gewickelt. An den Ausgängen der Sekundärwicklungen liegt daher eine betragsmäßig gleiche aber entgegengesetzte Spannung an. Die Sekundärwicklungen sind miteinander verbunden und die Verbindung bildet einen Neutralleiter und die anderen Enden der Sekundärspulen bilden Au ßenleiter eines Zweiphasenwechselstromsystems, welches die angeschlossenen Lasten mit Spannung versorgt.

Die Lasten sind an je einen Außenleiter und den Neutralleiter des Zweiphasenwechselstromsystems angeschlossen.

Der Vorteil der wie in dem Dokument EP 2 100 851 A2 beschriebenen verschalteten zwei Stromversorgungsanordnungen mit Frequenzumrichter und den in den Anmeldungen 10 150 728 und 11 164 316 beschriebenen Stromversorgungsanordnungen mit Frequenzumrichtern ist, dass neben der Versorgung der Lasten mittels der Stromversorgungsanordnung mit Frequenzumrichtern eine gleichzeitige Versorgung mit einer anderen Stromversorgungsanordnung möglich ist, ohne dass die Stromversorgungsanordnungen einander beeinflussen. Auch dieses ist in dem Dokument EP 2 100 851 A2 und den Anmeldungen 10 150 728 und 11 164 316 beschrieben.

Ein Nachteil der in dem Dokument EP 2 100 851 A2 beschriebenen Schaltung mit zwei Stromversorgungsanordnungen mit Frequenzumrichter ist, dass zur Realisierung des Zweiphasenwechselstromsystems zwei Frequenzumrichter notwendig sind. Ein Nachteil der in den Anmeldungen 10 150 728 und 11 164 316 beschriebenen Stromversorgungsanordnungen mit Frequenzumrichtern ist, dass zur Realisierung des Zweiphasenwechselstromsystems ein besonderer Trafo notwendig ist, der eine Primärwicklung und zwei gegensinnig gewickelte Sekundärwicklungen erfordert.

Ferner sind aus dem Lehrbuch "Leitungselektronische Schaltungen" von Dierk Schröder, ISBN 978-3-540-69300-0 Wechselrichter, zum Beispiel Schwingkreiswechselrichter, und AC-AC-Umformer, zum Beispiel AC-AC-Konverter mit Zwischenkreisspeicher oder Matrixkonverter bekannt, die grundsätzlich dazu geeignet sind Mehrphasenwechselstrom, insbesondere Dreiphasenwechselstrom bereitzustellen. Eine anwendungsbezogenen Beschreibung der Einbindung der Wechselrichter bzw. AC-AC-Umrichter in einer Stromversorgungsanordnung, die für Polysiliciumreaktoren geeignet und eingerichtet ist, fehlt allerdings in dem Lehrbuch.

Der Erfindung lag das Problem zugrunde eine Stromversorgungsanordnung der eingangs genannten Art so zu verbessern, dass sie leistungsfähiger ist.

Dieses Problem wird dadurch gelöst, dass die Stromversorgungsanordnung eine Schaltung zum Umwandeln des Eingangsstroms in einen n-phasigen Mehrphasenwechselstrom aufweist, wobei die Phasenverschiebung zwischen der verketteten Spannung eines sekundärseitig der Schaltung zum Umwandeln gebildeten n-Phasen-Wechselstromsystems 360°/n beträgt und wobei n eine natürliche Zahl größer oder gleich zwei ist, dass die Stromversorgungsanordnung n Ausgänge aufweist, dass die Ausgänge eine Kette bilden und dass an jedem Ausgang eine verkettete Spannung des n-Phasen-Wechselstromsystems anliegt. Vorzugsweise wird der Eingangstrom der Stromversorgungsanordnung von der Schaltung zum Umwandeln in einen Mehrphasenwechselstrom gewandelt, der mindestens drei Phasen hat.

Durch die Verteilung des Eingangsstroms, der üblicherweise aus einem Dreiphasenwechselstromsystem oder einem Einphasenwechselstromsystem entnommen wird, auf ein n-Phasenwechselstromsystem ist der Aufbau von leistungsfähigeren Stromversorgungsanordnungen mit Frequenzumrichter möglich. Es kann mit einer erfindungsgemäßen Stromversorgungsanordnung eine im Vergleich zu den aus dem Dokument EP 2 100 851 A2 bekannten Stromversorgungsanordnungen eine höhere Zahl von Lasten versorgt werden, bei gleichzeitiger Einsparung von Schaltungskomponenten. Ein weiterer Vorteil der erfindungsgemäßen Stromversorgungsanordnung ist, dass höhere Leitungsfaktoren erreicht werden können.

Die Schaltung zum Umwandeln des Eingangsstroms in einen n-phasigen Mehrphasenwechselstrom kann von einem vorzugsweise mit leistungselektronischen Bauelementen wie Thyristoren, Triacs, IGBTs, insbesondere RC-IGBTs oder RB-IGBTS aufgebauten AC-AC-Umrichter, insbesondere einem AC-AC-Konverter mit Zwischenkreisspeicher oder einem Matrixkonverter umfasst sein. Die Schaltung zum Umwandeln kann von einem vorzugsweise mit leistungselektronischen Bauelementen wie Thyristoren, Triacs, IGBTs aufgebauten Wechselrichter, insbesondere einem Schwingkreiswechselrichter umfasst sein. Der AC-AC-Umrichter oder der Wechselrichter sind vorzugsweise zur Erzeugung von einem n-phasigen Mehrphasenwechselstrom geeignet und eingerichtet. Dann ist im Gegensatz zu in den Anmeldungen 10 150 728 und 11 164 316 beschriebenen Stromversorgungsanordnungen eine trafolose Umwandlung des Eingangsstroms in einen n-phasigen Mehrphasenwechselstrom möglich.

Die Schaltung zum Umwandeln kann von einem AC-AC-Umrichter, insbesondere einem AC-AC-Konverter mit Zwischenkreisspeicher oder einem Matrixkonverter umfasst sein. Bei dem AC-AC-Konverter mit Zwischenkreisspeicher kann insbesondere ein AC-AC-Konverter mit einem Kondensator als Zwischenkreisspeicher verwendet werden. Als Matrixkonverter können direkte Matrixkonverter (z. B. konventionelle Matrixkonverter [CMC], Matrixkonverter in Vollbrückenschaltung) und indirekte Matrixkonverter (z. B. AC/DC-DC/AC Konverter ohne Zwischenkreiskondensator, konventionelle indirekte Matrixkonverter [IMC], Sparse Matrix Converter [SMC, VSMC, USMC], Dreipunktmatrixkonverter) verwendet werden.

Denkbar aber nicht so vorteilhaft wie die Umwandlung mit Hilfe von leistungselektronischen Halbleiterbauelementen ist die Umwandlung mit Hilfe von rotierenden Maschinen.

Die Schaltung zum Umwandeln kann von einem Wechselrichter, insbesondere von einem Schwingkreiswechselrichter umfasst sein.

Vorteilhaft ist es so, dass der AC-AC-Umrichter oder der Wechselrichter auch den Frequenzumrichter umfasst. Die Umwandlung des Eingangsstroms in einen Mehrphasenwechselstrom mit n-Phasen und die Heraufsetzung der Frequenz von im Regelfall zwischen 50 bis 60 Hz auf eine Frequenz von beispielsweise 0,3 bis 300 MHz, vorzugsweise von 20 MHz bis 200 MHz kann dadurch mit einer Schaltung erreicht werden.

Dem AC-AC-Umrichter oder dem Wechselrichter kann wenigstens ein Transformator nachgeschaltet sein, um die Spannung am Ausgang der Stromversorgungsanordnung auf ein für den zu versorgenden Prozess notwendiges Maß anzuheben. Der Transformator ist vorzugsweise ein n-Phasen-Transformator.

Der n-Phasen-Transformator kann primärseitig im Polygon geschaltet sein. Sekundärwicklungen des n-Phasen-Transformators liegen vorzugsweise parallel zu je einem Ausgang der Stromversorgungsanordnung.

Mittels einer erfindungsgemäßen Stromversorgungsanordnung kann eine erfindungsgemäße Anordnung aus einer ersten Stromversorgungsanordnung und der erfindungsgemäßen Stromversorgungsanordnung aufgebaut werden, wobei die erfindungsgemäße Stromversorgungsanordnung nachstehend als zweite Stromversorgungsanordnung bezeichnet wird. Eine solche Anordnung umfasst:
- die erste Stromversorgungsanordnung, wobei die erste Stromversorgungsanordnung wenigstens einen Einphasentransformator, einen Dreiphasentransformator oder einen n-Phasentransformator mit wenigstens drei Anzapfungen pro Sekundärwicklung aufweist, wobei eine Anzapfung jeder Sekundärwicklung mit einem sekundärseitigem Neutralleiter verbunden ist und die übrigen Anzapfungen jeder Sekundärwicklung über jeweils einen Leistungssteller mit einem sekundärseitigem Außenleiter verbunden sind, jeder sekundärseitige Außenleiter mit einem Au ßenleiteranschluss und der Neutralleiter mit wenigstens einem Neutralleiteranschluss verbunden ist, jeder Au ßenleiteranschluss zusammen mit einem der Neutralleiteranschlüsse einen Ausgang der ersten Stromversorgungsanordnung bildet, und
- zwischen einer und n zweiten Stromversorgungsanordnungen, wobei jeder Ausgang der ersten Stromversorgungsanordnung parallel zu der Kette oder einer der Ketten aus den Ausgängen der zweiten oder einer der zweiten Stromversorgungsanordnungen geschaltet ist.

Die erste Stromversorgungsanordnung kann eine Steuerung aufweisen, die die an die Anzapfungen einer Sekundärwicklung angeschlossenen Leistungssteller in Spannungsfolgesteuerung betreibt, wie zum Beispiel in einer Vielzahl von Patentanmeldungen der AEG Power Solutions GmbH oder einer Rechtsvorgängerin bereits beschrieben ist.

Eine solche Anordnung kann in einem Reaktor zur Herstellung von Polysilicium durch Dampfabscheidung nach dem Siemensverfahren eingesetzt werden, die einen Reaktorbehälter aufweist, in welchem Halter für Siliciumstäbe oder Siliciumdünnstäbe angeordnet sind, wobei die Halter elektrisch mit der Anordnung verbunden sind.

Beispiele von erfindungsgemäßen Anordnungen und Stromversorgungsanordnungen werden anhand der Zeichnung näher erläutert. Darin zeigen
- Fig. 1: eine erfindungsgemäße Anordnung, die aus einem Einphasenwechselstromsystem mit elektrischer Energie versorgt wird und
- Fig. 2: eine erfindungsgemäße Anordnung, die aus einem Dreiphasenwechselstromsystem mit elektrischer Energie versorgt wird.

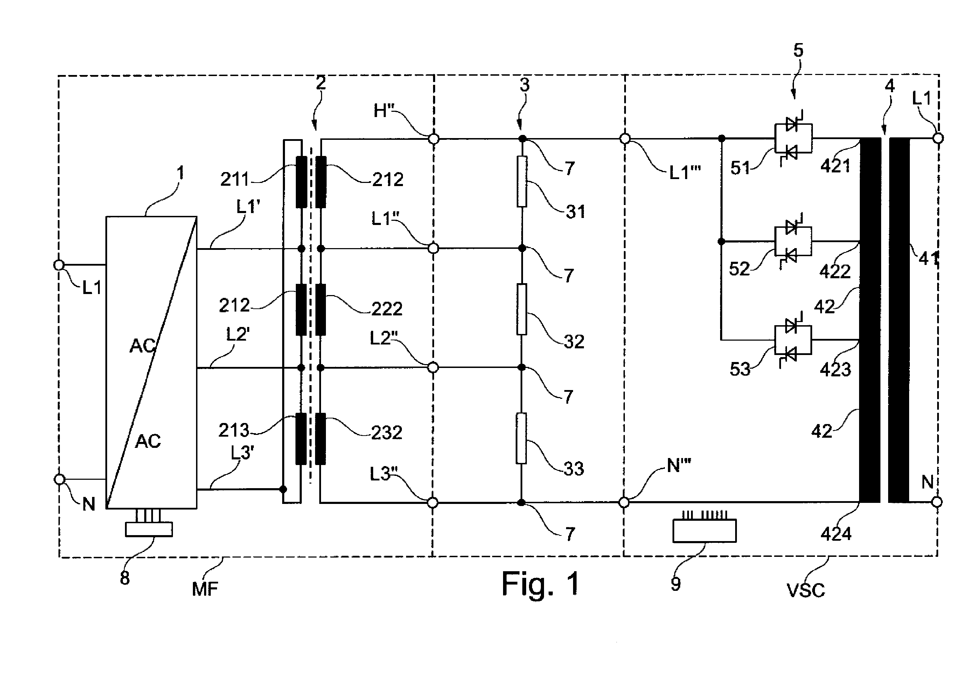

Die in Figur 1 dargestellte erfindungsgemäße Anordnung umfasst eine erste Stromversorgungsanordnung VSC und eine zweite Stromversorgungsanordnung MF, die gemeinsam zur Versorgung von an die Anordnung angeschlossene Lasten mit elektrischer Energie vorgesehen sind. Bei den Lasten handelt es sich um Siliciumstäbe 3, die in einem Reaktor zur Herstellung von Polysilicium durch Dampfabscheidung nach dem Siemensverfahren angebracht sind.

In einem Reaktorbehälter des Reaktors sind Halterungen 7 angebracht, welche die Siliciumstäbe 3 einerseits halten und andererseits einen elektrischen Kontakt zwischen den Siliciumstäben 3 und elektrischen Anschlüssen des Reaktors herstellen.

Die erste Stromversorgungsanordnung VSC hat einen Eingang, der an einen Außenleiter L1 und einen Neutralleiter N eines Einphasenwechselstromsystems angeschlossen ist. Die erste Stromversorgungsanordnung VSC weist einen Einphasenwechselstromtransformator 4 auf, dessen Primärwicklung 41 mit dem Eingang der erste Stromversorgungsanordnung VSC verbunden ist. Eine Sekundärwicklung 42 des Transformators 4 weist vier Anzapfungen 421 , 422, 423, 424 auf, von denen drei Anzapfungen 421, 422, 423 über Leistungssteller 51, 52, 53 mit einem Au ßenleiteranschluss L1''' eines Ausgangs der ersten Stromversorgungsanordnung verbunden sind. Die vierte Anzapfung 424 ist dagegen mit einem Neutralleiteranschluss N"' des Ausgangs der ersten Stromversorgungsanordnung VSC verbunden. Die vierte Anzapfung 424 ist an einem Ende der Sekundärwicklung 42.

Die Leistungssteller 51, 52, 53 sind Thyristor-Leistungssteller, die durch zwei antiparallel geschaltete Thyristoren gebildet werden. Die Leistungssteller 51, 52, 53 werden in einer Spannungsfolgesteuerung betrieben.

Die Spannungsfolgesteuerung wird durch eine Steuerung 9 realisiert, die mit den Thyristoren der Leistungssteller 51, 52, 53 und weiteren zu steuernden Bauelementen und/oder Sensoren zur Erfassung von Strom, Spannung und anderem verbunden sind, was nicht näher dargestellt ist.

Die zweite Stromversorgungsanordnung MF hat ebenfalls einen Eingang, der an den Außenleiter L 1 und den Neutralleiter N des gleichen Einphasenwechselstromsystems angeschlossen ist, wie die erste Stromversorgungsanordnung VSC. Die zweite Stromversorgungsanordnung MF weist einen AC-AC-Umrichter 1 auf, der an den Eingang der zweiten Stromversorgungsanordnung MF angeschlossen ist.

Bei dem AC-AC-Umrichter 1 kann es sich um einen Matrixkonverter handeln, mit dem der Einphasenwechselstrom am Eingang des AC-AC-Umrichters 1 mit einer Frequenz von 50 bis 60 Hz in einen Dreiphasenwechselstrom mit einer Frequenz von 20 bis 200 MHz umgewandelt wird. Der AC-AC-Umrichter 1 ist somit zugleich eine Schaltung zum Umwandeln des Eingangstroms indie Dreiphasenwechselströme und ein Frequenzumrichter. Am Ausgang des AC-AC-Umrichters 1 werden über drei Außenleiter L1', L2', L3' die Dreiphasenwechselströme zur Verfügung gestellt.

Der Ausgang des AC-AC-Umrichters 1 ist mit einem Dreiphasenwechselstromtransformator 2 verbunden, dessen Primärwicklungen 211, 212, 213 im Dreieck geschaltet sind. Die Sekundärwicklungen 212, 222, 232 sind mit Anschlüssen H", L1", L2", L3" verbunden, die paarweise Ausgänge der zweiten Stromversorgungsanordnungen MF bilden. An diese Ausgänge sind die Siliciumstäbe 3 angeschlossen, wobei ein erster Siliciumstab 31 mit den Anschlüssen H", L1" verbunden ist, die einen ersten Ausgang bilden, ein zweiter Siliciumstab 32 mit den Anschlüssen L1", L2" verbunden ist, die einen zweiten Ausgang bilden und ein dritter Siliciumstab 33 mit den Anschlüssen L2", L3" verbunden ist, die einen dritten Ausgang der zweiten Stromversorgungsanordnung MF bilden. Aufgrund des Phasenwinkels von 120° zwischen den Außenleitern stellt es sich so ein, dass zwischen dem H" und dem Anschluss L3" bei symmetrischer Belastung durch die Siliciumstäbe 31, 32, 33 keine Spannung abfällt.

Der AC-AC-Umrichter 1 wird von einer Steuerung 8 gesteuert, was nicht detailliert dargestellt ist.

Im Grunde genommen könnten die Anschlüsse H" und L3" ohne Auswirkungen auf die zweite Stromversorgungsanordnung MF verbunden werden. Die Sekundärwicklungen 31, 32, 33 wären dann im Dreieck geschaltet. Eine Verbindung zwischen diesen beiden Anschlüssen H" und L 3" wird jedoch nicht hergestellt, da diese auch den Au ßenleiteranschluss L 1"' und den Neutralleiteranschluss N"' der ersten Stromversorgungsanordnung VSC kurzschlösse. Dieses ist jedoch nicht erwünscht.

Da zwischen den Anschlüssen H" und L3" der zweiten Stromversorgungsanordnung MF keine Spannung abfällt, und so auch zwischen den Anschlüssen L1"', N"' des Ausgangs der ersten Stromversorgungsanordnung VSC keine von der zweiten Stromversorgungsanordnung MF bereitgestellte Spannung abfällt, kann die zweite Stromversorgungsanordnung MF bei symmetrischer Belastung durch die Siliciumstäbe 31,32, 33 keinen Strom in die erste Stromversorgungsanordnung VSC treiben.

Um Rückwirkungen der ersten Stromversorgungsanordnung VSC auf die zweite Stromversorgungsanordnung MF zu verhindern, können in den Ausgängen der zweiten Stromversorgungsanordnung MF Hochpassfilter eingebaut werden, die von der Ausgangsspannung der ersten Spannungsversorgungsanordnung VSC nicht passiert werden können.

Die in der Figur 1 dargestellte Anordnung, insbesondere die zweite Stromversorgungsanordnung MF kann erweitert werden, um an mehr Ausgängen mehr Siliciumstäbe anschließen zu können. Dazu kann statt eines AC-AC-Umrichters mit einem Ausgang für ein Dreiphasenwechselstromsystem ein AC-AC-Umrichter verwendet werden, der einen Ausgang für ein Mehrphasenwechselstromsystem mit mehr als drei Phasen zur Verfügung stellt, beispielsweise für ein Vier-, Fünf- oder Sechsphasenwechselstromsystem.

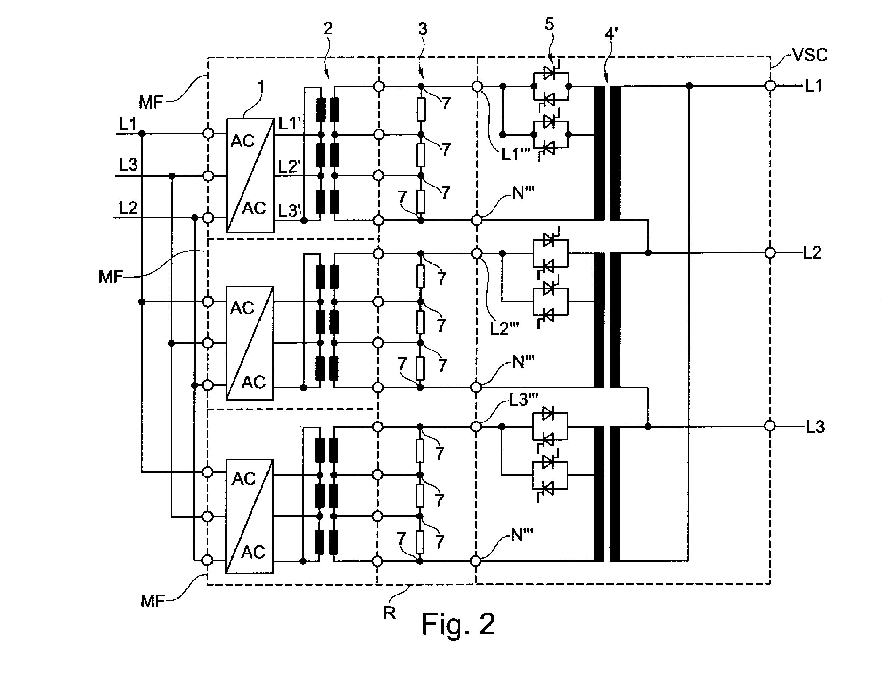

Die in der Figur 1 dargestellte Anordnung kann aber auch in der in Figur 2 dargestellten Art und Weise erweitert werden. Die Erweiterungen betreffen dann zum einen die Verdreifachung der zweiten Stromversorgungsanordnungen MF und die Erweiterung der ersten Stromversorgungsanordnung VSC zu einer Dreiphasen-Stromversorgungsanordnung, wozu der

Einphasenwechselstromtransformator durch einen Dreiphasenwechselstromtransformator 4' ersetzt wird, an dessen Sekundärwicklungen die Leistungssteller 5 in von der Anordnung gemäß Fig. 1 bekannten Art und Weise angeschlossen und mit den Siliciumstäben 3 verbunden sind. Jedem Ausgang der ersten Stromversorgungsanordung VSC ist eine zweite Stromversorgungsanordung MF zugeordnet, so wie es von der Anordnung gemäß Fig. 1 bekannt ist.

Auch die in Figur 2 dargestellte Anordung kann erweitert werden, zum Beispiel dadurch, dass man in der ersten Stromversorgungsanordnung VSC einen Transformator für Wechselstrom mit mehr als drei Phasen verwendet und/oder in den zweiten Stromversorgungsanordnungen MF AC-AC-Umrichter 1 zur Umwandlung des Eingangstroms der zweiten Stromversorgungsanordnungen in einen Mehrphasenwechselstrom verwendet.

## Patentansprüche

1. Stromversorgungsanordnung (MF) für einen Reaktor (R) zur Polysiliciumherstellung mit einem Frequenzumrichter, mit mindestens einem Eingang zur Aufnahme eines Eingangsstroms aus einem Versorgungsnetz, mit welchem der Eingang verbindbar ist, und Ausgängen zum Anschließen von einer oder mehrerer Lasten (3), über welchen die Last oder die Lasten (3) mit einem Ausgangsstrom versorgbar sind,
**dadurch gekennzeichnet,**
**dass** die Stromversorgungsanordnung (MF) eine trafolose Schaltung zum Umwandeln des Eingangsstroms in einen n-phasigen Mehrphasenwechselstrom aufweist, wobei die Phasenverschiebung zwischen verketteten Spannungen eines sekundärseitig der Schaltung zum Umwandeln gebildeten n-Phasen-Wechselstromsystems 360°/n beträgt und wobei n eine natürliche Zahl größer oder gleich zwei ist,
**dass** die Stromversorgungsanordnung n Ausgängen aufweist,
**dass** die Ausgänge eine Kette bilden und
**dass** an jedem Ausgang eine der verketteten Spannungen des n-Phasen-Wechselstromsystems anliegt.

2. Stromversorgungsanordnung (MF) nach Anspruch 1 , **dadurch gekennzeichnet, dass** n eine natürliche Zahl größer oder gleich drei ist.

3. Stromversorgungsanordnung (MF) nach Anspruch 1 oder 2, **dadurch gekennzeichnet, dass** die Schaltung zum Umwandeln von einem AC-AC-Umrichter (1), insbesondere einem AC-AC-Konverter mit Zwischenkreisspeicher oder einem Matrixkonverter umfasst ist.

4. Stromversorgungsanordnung (MF) nach Anspruch 1 oder 2, **dadurch gekennzeichnet, dass** die Schaltung zum Umwandeln von einem Wechselrichter, insbesondere einem Schwingkreiswechselrichter umfasst ist.

5. Stromversorgungsanordnung (MF) nach Anspruch 3 oder 4, **dadurch gekennzeichnet, dass** der AC-AC-Umrichter (1) oder der Wechselrichter den Frequenzumrichter umfasst.

6. Stromversorgungsanordnung (MF) nach einem der Ansprüche 1 bis 5, **dadurch gekennzeichnet, dass** dem AC-AC-Umrichter (1) oder dem Wechselrichter wenigstens ein Transformator (2) nachgeschaltet ist.

7. Stromversorgungsanordnung (MF) nach Anspruch 6, **dadurch gekennzeichnet, dass** der Transformator (2) ein n-Phasen-Transformator ist.

8. Stromversorgungsanordnung (MF) nach Anspruch 7, **dadurch gekennzeichnet, dass** der n-Phasen-Transformator (2) primärseitig im Polygon geschaltet ist.

9. Stromversorgungsanordnung (MF) nach Anspruch 7 oder 8, **dadurch gekennzeichnet, dass** Sekundärwicklungen (212, 222, 232) des n-Phasen-Transformators (2) parallel zu je einem Ausgang der Stromversorgungsanordnung (MF) liegen.

10. Anordnung umfassend
- eine erste Stromversorgungsanordnung (VSC), wobei die erste Stromversorgungsanordnung (VSC) wenigstens einen Einphasentransformator (5), einen Dreiphasentransformator (5) oder einen n-Phasentransformator mit wenigstens drei Anzapfungen (421, 422, 423, 424) pro Sekundärwicklung (42) aufweist, wobei eine Anzapfung (424) jeder Sekundärwicklung (42) mit einem sekundärseitigem Neutralleiter verbunden ist und die übrigen Anzapfungen (421, 422, 423) jeder Sekundärwicklung (42) über jeweils einen Leistungssteller (5) mit einem sekundärseitigem Außenleiter verbunden sind, jeder sekundärseitige Außenleiter mit einem Außenleiteranschluss (L1"', L2"', L3"') und der Neutralleiter mit wenigstens einem Neutralleiteranschluss (N"') verbunden ist, jeder Außenleiteranschluss (L1''', L2"', L3"') zusammen mit einem der Neutralleiteranschlüsse (N"') einen Ausgang der ersten Stromversorgungsanordnung (VSC) bildet, und
- zwischen einer und n zweiten Stromversorgungsanordnungen (MF)
**dadurch gekennzeichnet, dass**
die zweite Stromversorgungsanordnung (MF) bzw. die zweiten Stromversorgungsanordnungen (MF) nach einem der Ansprüche 1 bis 9 ausgebildet ist bzw. sind, wobei jeder Ausgang der ersten Stromversorgungsanordnung (VSC) parallel zu der Kette oder einer der Ketten aus den Ausgängen der zweiten oder einer der zweiten Stromversorgungsanordnungen (MF) geschaltet ist.

11. Reaktor zur Herstellung von Polysilicium durch Dampfabscheidung nach dem Siemensverfahren mit einem Reaktorbehälter, in welchem Halter (7) für Siliciumstäbe oder Siliciumdünnstäbe angeordnet sind, wobei die Halter (7) elektrisch mit einer Anordnung verbunden sind,
**dadurch gekennzeichnet, dass**
die Anordnung nach Anspruch 10 ausgebildet ist.
